# FASCICULE DE BREVET EUROPEEN

(11) **EP 0 994 468 B1**
(45) Date de publication et mention de la délivrance du brevet: **21.11.2001**
(21) Numéro de dépôt: 99402418.0
(22) Date de dépôt: 04.10.1999
(51) Int. Cl.: G11B 5/62, H01F 1/00, C08G 73/02

(54) **Polyanilines à propriétés électriques et magnétiques et procédé de fabrication**
Polyaniline mit elektrischen und mechanischen Eigenschaften und Verfahren zu ihrer Herstellung
Polyanilines with electrical and mechanical properties and process for preparing them

(30) Priorité: 12.10.1998 FR 9812735
(43) Date de publication de la demande: 19.04.2000
(73) Titulaire: Nexans, 75008 Paris (FR)
(72) Inventeur: Cottevieille, Denis, 93100 Montreuil Sous Bois (FR)
(74) Mandataire: Feray, Valérie

(56) Documents cités:
- EP-A- 0 545 819
- DATABASE WPI Section Ch, Week 8919 Derwent Publications Ltd., London, GB; Class A26, AN 89-141410 XP002104483 & JP 01 086503 A (MITSUI MINING & SMELTING CO), 31 mars 1989 (1989-03-31)

## Description

La présente invention concerne des polyanilines et leurs dérivés possédant des propriétés électriques non linéaires améliorées et magnétiques. Elle concerne en outre le procédé de préparation de ces composés.

Il existe déjà différents polymères intrinsèquement conducteurs qui possèdent des propriétés non linéaires quand ils sont exposés à un champ électrique. De nombreux brevets de l'art antérieur divulguent de tels composés, comme par exemple le brevet français n°96.10.963 de la demanderesse.

Des copolymères possédant des propriétés ferromagnétiques ont été développés par la demanderesse dans le brevet européen EP92403263. Ces copolymères comprennent des groupes aminoaromatiques, à base d'un motif élémentaire comprenant un premier groupe de composés aminoaromatiques choisis parmi les dérivés de l'aniline et les formes iminoquinoniques correspondantes et un second groupe de composés aminoaromatiques substitués choisis parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants. Cependant, ces composés ne possèdent pas simultanément des propriétés électriques et magnétiques suffisantes.

L'homme du métier connaît déjà des moyens de synthétiser la polyaniline en vue d'obtenir des propriétés électriques non linéaires améliorées et des propriétés ferromagnétiques. Il est par exemple connu de dissoudre la polyaniline dans sa forme neutre dans la NMP (N méthyl pyrrolidone) et de faire réagir la solution avec une solution de sulfate de fer aqueuse, puis de la redoper par l'action de l'acide chlorhydrique. Ce procédé s'articule donc en plusieurs étapes distinctes. Le procédé objet de l'invention permet de synthétiser une polyaniline ayant des propriétés électriques non linéaires améliorées et des propriétés magnétiques en une seule étape.

Le composé obtenu peut trouver son application dans des câbles destinés à être utilisés dans le domaine des télécommunications. Ces câbles possèdent une structure coaxiale et sont constitués d'une âme métallique entourée d'au moins deux couches dont l'une est une couche de matériau diélectrique comportant, le matériau objet de l'invention et filtrent intrinsèquement les perturbations électromagnétiques qu'ils conduisent. L'utilisation du matériau objet de l'invention permet une meilleure adaptation de la fréquence de coupure des câbles filtrants. Ceci est en particulier avantageux pour des câbles filtrants de longueur réduite.

Ce procédé de fabrication de la polyaniline autodopée à partir de la polyaniline neutre comporte les étapes suivantes :
- on dissout de la polyaniline neutre dans une proportion de 0,1 à 3 pour cent parties en poids dans une solution d'acide sulfurique fumant comportant, dans une proportion de 0,1 à 10 parties pour cent en poids et préférablement de 2 à 10 parties pour cent en poids, un métal magnétique, un sel de métal magnétique ou tout mélange de tels métaux et/ou sels de tels métaux qui soit soluble dans l'acide sulfurique fumant;
- on maintient en agitation la solution pendant un temps compris entre 10 minutes et 72 heures, avantageusement pendant 2 heures;
- on verse lentement cette solution dans du méthanol ou de l'eau distillée pour obtenir un précipité de polyaniline autodopée magnétique ;
- on lave le gâteau de précipitation jusqu'à ce que la solution de lavage ait un pH neutre et on sèche ledit gâteau de précipitation.

Selon une variante particulière, le l'élément métallique est incorporé par l'intermédiaire d'un élément métallique paramagnétique et notamment ferromagnétique.

Avantageusement l'élément métallique est incorporé par l'intermédiaire d'un sel ou d'un mélange de sels paramagnétiques et notamment ferromagnétiques.

Le procédé sera mieux compris avec les exemples de réalisation préférentielle mais non obligatoire donné ci-dessous.

Les avantages que présente l'invention ressortiront des deux modes opératoires décrits ci-dessous. Bien entendu, la présente invention n'est pas limitée à ces modes de réalisation, mais l'homme de l'art peut envisager de nombreuses variantes sans que l'on s'écarte du procédé objet de l'invention.

Une première réalisation consiste à dissoudre 1 gramme de polyaniline dédopée dans 60cm³ d'acide sulfurique fumant. On ajoute 430mg d'acétylacétonate de nickel et on maintient la solution obtenue en agitation pendant 2 heures. La solution ainsi obtenue est ensuite versée lentement dans du méthanol pour obtenir un précipité de polyaniline autodopée magnétique. On lave alors le gâteau de précipitation jusqu'à que la solution de lavage (ou filtrat) ait un pH neutre. Le produit obtenu est ensuite séché pendant 72 heures à 60 degrés Celsius. On obtient ainsi 1.2g de produit sec. Le dosage élémentaire donne les résultats suivants quant à sa composition élémentaire : 11% d'azote, 5.1% de soufre et 0.15% de nickel.

Une seconde réalisation avantageuse consiste à dissoudre 1 gramme - de polyaniline dédopée dans , 50cm³ d'acide sulfurique fumant. On ajoute 500mg sulfate de fer hydraté et on maintient la solution obtenue en agitation pendant 2 heures. La solution ainsi obtenue est ensuite versée lentement dans du méthanol pour obtenir un précipité de polyaniline autodopée magnétique. On lave alors le gâteau de précipitation jusqu'à que la solution de lavage (ou filtrat) ait un pH neutre. Le produit obtenu est ensuite séché pendant 72 heures à 60 degrés Celsius. On obtient ainsi 1.35g de produit sec. Le dosage élémentaire donne les résultats suivants quant à sa composition élémentaire : 11% d'azote, 5% de soufre et 0.6% de nickel.

## Revendications

1. Procédé de -fabrication de polyaniline à propriétés électriques non linéaires améliorées et à propriétés magnétiques à partir de polyaniline neutre **caractérisée en ce qu'**il comporte les étapes suivantes :
- on dissout de la polyaniline neutre dans une proportion de 0,1 à 3 pour cent parties en poids dans une solution d'acide sulfurique fumant comportant, dans une proportion de 0,1 à 10 parties pour cent en poids, un métal magnétique, un sel de métal magnétique ou tout mélange de tels métaux et/ou sels métalliques qui soit soluble dans l'acide sulfurique fumant;
- on maintient en agitation la solution pendant un temps compris entre 10 minutes et 72 heures ;
- on verse lentement cette solution dans du méthanol ou de l'eau distillée pour obtenir un précipité de polyaniline autodopée magnétique ;
- on lave le gâteau de précipitation jusqu'à ce que la solution de lavage ait un pH neutre et on sèche ledit gâteau de précipitation.

2. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire d'un élément métallique paramagnétique

3. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire d'un élément métallique ferromagnétique

4. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire d'un sel ou d'un mélange de sels paramagnétiques.

5. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire d'un sel ou d'un mélange de sels ferromagnétiques.

6. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire de sulfate de fer hydraté.

7. Procédé de fabrication de polyaniline à propriétés électriques non linéaires améliorées et à propriétés magnétiques à partir de polyaniline neutre selon la revendication principale **caractérisée en ce que** l'élément métallique est incorporé par l'intermédiaire de l'acétylacétonate de nickel.

8. Polyaniline à propriétés électriques non linéaires améliorées et à propriétés magnétiques **caractérisée en ce qu'**elle est fabriquée à partir de polyaniline neutre avec les étapes suivantes :
- on dissout de la polyaniline neutre dans une proportion de 0,1 à 3 pour cent parties en poids dans une solution d'acide sulfurique fumant comportant, dans une proportion de 0,1 à 10 parties pour cent en poids, un métal magnétique, un sel de métal magnétique ou tout mélange de tels métaux et/ou sels métalliques qui soit soluble dans l'acide sulfurique fumant;
- on maintient en agitation la solution pendant un temps compris entre 10 minutes et 72 heures ;
- on verse lentement cette solution dans du méthanol ou de l'eau distillée pour obtenir un précipité de polyaniline autodopée magnétique ;
- on lave le gâteau de précipitation jusqu'à ce que la solution de lavage ait un pH neutre et on sèche ledit gâteau de précipitation.

## Patentansprüche

1. Verfahren zur Herstellung von Polyanilin mit verbesserten nichtlinearen elektrischen Eigenschaften und mit magnetischen Eigenschaften aus neutralem Polyanilin, welches **dadurch gekennzeichnet ist, dass** es die folgenden Schritte umfasst:
- man löst neutrales Polyanilin in einem Anteil von 0,1 bis 3 Gew.-% in einer rauchenden Schwefelsäurelösung, die in einem Anteil von 0,1 bis 10 Gew.-% ein magnetisches Metall, ein Salz eines magnetisches Metalls, oder jede Mischung solcher Metalle und/oder Metallsalze solcher Metalle, die in der rauchenden Schwefelsäure lösbar sind, aufweist;
- man hält die Lösung für einen Zeitraum von 10 Minuten bis 72 Stunden in Bewegung;
- man gießt diese Lösung langsam in Methanol oder destilliertes Wasser um eine Niederschlag von magnetischem, autodotierten Polyanilin zu erhalten;
- man wäscht den Niederschlagskuchen bis die Waschlösung einen neutralen pH-Wert hat und man trocknet den Niederschlagskuchen.

2. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element mittels eines paramagnetischen metallischen Elements eingebracht wird.

3. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element mittels eines ferromagnetischen metallischen Elements eingebracht wird.

4. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element mittels eines Salzes oder einer Mischung aus paramagnetischen Salzen eingebracht wird.

5. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element mittels eines Salzes oder einer Mischung aus ferromagnetischen Salzen eingebracht wird.

6. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element durch hydriertes Eisensulfat eingebracht wird.

7. Verfahren zur Herstellung von Polyanilin mit verbesserten nichtlinearen elektrischen Eigenschaften und mit magnetischen Eigenschaften aus neutralem Polyanilin nach dem Hauptanspruch,
**dadurch gekennzeichnet, dass** das metallische Element durch Nickelacetylacetonat eingebracht wird.

8. Polyanilin mit verbesserten nichtlinearen elektrischen Eigenschaften und mit magnetischen Eigenschaften
**dadurch gekennzeichnet, dass** es aus neutralem Polyanilin, durch die folgenden Schritte hergestellt wird:
- man löst neutrales Polyanilin in einem Anteil von 0,1 bis 3 Gew.-% in einer rauchenden Schwefelsäurelösung, die in einem Anteil von 0,1 bis 10 Gew.-% ein magnetisches Metall, ein Salz eines magnetisches Metalls, oder jede Mischung solcher Metalle und/oder Metallsalze solcher Metalle, die in der rauchenden Schwefelsäure lösbar sind, aufweist;
- man hält die Lösung für einen Zeitraum von 10 Minuten bis 72 Stunden in Bewegung;
- man gießt diese Lösung langsam in Methanol oder destilliertes Wasser um eine Niederschlag von magnetischem, autodotierten Polyanilin zu erhalten;
- man wäscht den Niederschlagskuchen bis die Waschlösung einen neutralen pH-Wert hat und man trocknet den Niederschlagskuchen.

## Claims

1. A method of manufacturing polyaniline having magnetic properties and improved non-linear electrical properties, starting from neutral polyaniline, the method being **characterized in that** it comprises the following steps:
· the neutral polyaniline is dissolved at a concentration of 0.1 to 3 parts per hundred by weight in a solution of fuming sulfuric acid including, at a concentration lying in the range 0.1 to 10 parts per hundred by weight, a magnetic metal, a magnetic metal salt, or any mixture of such metals and/or metal salts that is soluble in fuming sulfuric acid;
· the solution is maintained under stirring for a length of time lying in the range 10 minutes to 72 hours;
· the solution is poured slowly into methanol or distilled water to obtain a precipitate of magnetic self-doped polyaniline; and
· the precipitation cake is washed until the washing solution has neutral pH, and said precipitation cake is dried.

2. A method of manufacturing polyaniline having magnetic properties and improved non-linear electrical properties starting from neutral polyaniline, according to the main claim, **characterized in that** the metal element is incorporated by means of a paramagnetic metal element.

3. A method of manufacturing polyaniline having magnetic properties and improved non-linear electrical properties starting from neutral polyaniline, according to the main claim, **characterized in that** the metal element is incorporated by means of a ferromagnetic metal element.

4. A method of manufacturing polyaniline having magnetic properties and improved non-linear electrical properties starting from neutral polyaniline, according to the main claim, **characterized in that** the metal element is incorporated by means of a paramagnetic salt or a mixture of paramagnetic salts.

5. A method of manufacturing polyaniline having magnetic properties and improved non-linear electrical properties starting from neutral polyaniline, according to the main claim, **characterized in that** the metal element is incorporated by means of a ferromagnetic salt or a mixture of ferromagnetic salts.

6. A method of manufacturing polyaniline having magnetic properties and improved non-linear electrical properties starting from neutral polyaniline, according to the main claim, **characterized in that** the metal element is incorporated by means of a hydrated iron sulfate.

7. A method of manufacturing polyaniline having magnetic properties and improved non-linear electrical properties starting from neutral polyaniline, according to the main claim, **characterized in that** the metal element is incorporated by means of nickel acetylacetonate.

8. A polyaniline having magnetic properties and improved non-linear electrical properties, **characterized in that** it is manufactured from neutral polyaniline using the following steps:
· the neutral polyaniline is dissolved at a concentration of 0.1 to 3 parts per hundred by weight in a solution of fuming sulfuric acid including, at a concentration lying in the range 0.1 to 10 parts per hundred by weight, a magnetic metal, a magnetic metal salt, or any mixture of such metals and/or metal salts that is soluble in fuming sulfuric acid;
· the solution is maintained under stirring for a length of time lying in the range 10 minutes to 72 hours;
· the solution is poured slowly into methanol or distilled water to obtain a precipitate of magnetic self-doped polyaniline; and
· the precipitation cake is washed until the washing solution has neutral pH, and said precipitation cake is dried.
